# EUROPEAN PATENT SPECIFICATION

(11) **EP 2 461 164 B1**
(45) Date of publication and mention of the grant of the patent: **14.04.2021**
(21) Application number: 10804063.5
(22) Date of filing: 14.07.2010
(51) Int. Cl.: G01N 35/02, B01L 3/00, G09F 3/00

(54) **AUTOMATIC ANALYSIS DEVICE**
AUTOMATIKANALYSEVORRICHTUNG
DISPOSITIF D'ANALYSE AUTOMATIQUE

(30) Priority: 29.07.2009 JP 2009175996
(43) Date of publication of application: 06.06.2012
(73) Proprietor: Hitachi High-Tech Corporation, Minato-ku Tokyo 105-6409 (JP)
(72) Inventor: MINEMURA, Yusuke, Hitachinaka-shi Ibaraki 312-8504 (JP); YAMAGUCHI, Takuya, Hitachinaka-shi Ibaraki 312-8504 (JP)
(74) Representative: Strehl Schübel-Hopf & Partner
(86) International application number: PCT/JP2010/004554
(87) International publication number: WO 2011/013310

(56) References cited:
- EP-A1- 2 020 263
- JP-A- 4 009 734
- JP-A- 4 009 734
- JP-A- 2001 272 410
- JP-A- 2001 272 410
- JP-A- 2005 043 137
- JP-A- 2005 043 137
- JP-A- 2006 243 321
- JP-A- 2006 243 321
- JP-A- 2007 006 239
- JP-A- 2007 033 205
- JP-T- 2003 511 674
- JP-T- 2003 511 674
- JP-U- 57 016 872
- JP-U- 57 016 872

## Description

### Technical Field

The present invention relates to an automatic analyzer that performs qualitative/quantitative analysis of a blood, urine, or other biological sample, and more particularly to an automatic analyzer that includes a storage medium for attaching reagent identification information to a reagent container.

### Background Art

In automatic analyzers for analyzing a blood, urine, or other biological sample, a reagent reacting with an analysis target constituent in the sample is added to and mixed with the sample for analysis purposes. Due to advanced pharmaceutical technologies developed in recent years, reagents capable of analyzing a variety of types of analysis targets have been commercialized. Most of the automatic analyzers using a variety of types of reagents include a mechanism that attaches a barcode or other identification code to a reagent container to let the automatic analyzer automatically identify the type of a reagent. This feature prevents an erroneous analysis result from being reported due to the use of a wrong reagent. More specifically, such automatic analyzers attach a barcode to a reagent container containing a reagent, allow a barcode reader to read the barcode, store reagent information on memory holding means of the automatic analyzers, and use the stored reagent information as needed. An employed system makes effective use of the reagent information. For example, if the read reagent information indicates that the reagent has expired, the system issues an alarm to alert a user to a condition that requires attention. The reagent information includes, for instance, the production lot number, serial number, and initial capacity of a reagent in addition to its expiration date. The reagent information is recorded in the form of the aforementioned barcode, attached to a reagent container, and read.

The barcode has been frequently used as an identification code. In recent years, a two-dimensional code and RFID are additionally used in order to satisfy the needs for increasing the amount of identification information and managing an increased amount of information. RFID in particular establishes communication without regard to the orientations of a reader antenna and a tag antenna for an IC tag when they face each other and are within a read/write (communication) region. Therefore, RFID is considered to be more advantageous than the barcode in terms of increasing the amount of manageable information and improving the reliability of read information.

An analysis system and an analysis device proposed in Patent Document 1 include means for providing increased ease of maintenance by attaching an IC tag to a component part and reading information from the IC tag.

### Prior Art Literature

### Patent Document

Patent Document 1: JP-2005-283344-A Related art is disclosed in JP 2005043137 A. Further, EP 2020263 A1 discloses an automatic analyzer from which the pre-characterising part of claim 1 starts out.

### Summary of the Invention

### Problems to be Solved by the Invention

As mentioned above, RFID can establish communication without having to pay special attention to the orientations of the reader antenna and tag antenna, particularly, their tilt angles. Therefore, RFID makes it possible to acquire information with ease. It means that communication can be established without regard to the orientations of the reader antenna and tag antenna.

However, when an automatic analyzer manages reagent information with an IC tag attached to a reagent container in a situation where the reagent container is bilaterally symmetrical and shaped like a rectangular parallelepiped and can be oriented in a normal direction and in a reverse direction when placed in a reagent container holder, the reagent information may be read for analysis purposes while the reagent container is oriented in a wrong direction. If, in the above case, a pairing cassette containing a first reagent and a second reagent is used as the reagent container, the first and second reagents may be erroneously recognized and used for analysis purposes. In such an example, it is difficult to obtain correct analysis results. To prevent such a mistake, it is necessary to enable the automatic analyzer to recognize a reversely-oriented reagent container.

A first object of the present invention is to provide an automatic analyzer that includes means for preventing the reagent container from being reversely oriented.

It is important that the presence of the reagent container be detected in addition to its orientation. An optical sensor has been conventionally used to check whether the reagent container is present. However, the use of such an optical sensor complicates the configuration of the automatic analyzer and increases its cost.

A second object of the present invention is to provide an automatic analyzer that includes means for detecting the presence of the reagent container without using an optical sensor.

### Means for Solving the Problems

The present invention is configured as described set forth in the appended claims, below to achieve the above objects.

A particularly preferred embodiment is as described below.

The configuration for achieving the first object is described below. An IC tag is attached to a reagent container. A tag antenna is positioned close to one of the four sides of the IC tag. The tag antenna positioned in this manner is placed in a region between the side close to the tag antenna and a line that is positioned at the center of the IC tag and in parallel with the side close to the tag antenna (this region is hereinafter referred to as the normally-oriented read region). A reader antenna is then positioned so as to read information included in the normally-oriented read region only. The reagent container in a reagent cool box is rotationally transferred and stopped for a read operation. If, in this instance, the reagent container is normally oriented, the IC tag attached to the reagent container can be read. If, on the other hand, the reagent container is reversely oriented, the IC tag cannot be read because the tag antenna is outside the reader antenna's read region.

When the reagent container is reversely oriented, the IC tag cannot be read at the position where the reagent container is stopped for a read operation because it is positioned outside the reader antenna's read region due to the above-described configuration. When the IC tag cannot be read during the read operation, the reagent container moves in such a manner that the tag antenna of the IC tag attached to the reagent container enters the reader antenna's read region. The read operation is then performed again to read the IC tag. When the IC tag is read during the above re-read operation, it can be concluded that the reagent container is reversely oriented. Thus, if the reagent container is reversely oriented, an alarm can be issued to alert a user to a condition that requires attention.

The configuration for achieving the second object is described below. When the IC tag cannot be read during the above-mentioned two read operations, there is no knowing whether the failure to read the IC tag is due to a missing reagent container, a broken IC tag, or other factor. Thus, when the IC tag cannot be read during the two read operations, the presence of the reagent container is detected by using a reagent probe to detect a liquid level or an abnormal liquid level drop.

### Effects of the Invention

As a first advantage, the present invention provides an automatic analyzer that includes means for preventing a reagent container from being reversely oriented.

As a second advantage, the present invention provides an automatic analyzer that includes means for detecting the presence of the reagent container without using an optical sensor.

### Brief Description of the Drawings

Fig. 1 is a diagram illustrating an overview of an automatic analyzer.
Fig. 2 is a diagram illustrating the interior of a reagent cool box and the configuration of a reagent container, an IC tag, and an RFID reader/writer.
Fig. 3 is a diagram illustrating the configuration of reagent containers and IC tags in the reagent cool box.
Fig. 4 is a first exemplary diagram illustrating the configuration of a reagent container, an IC tag, and a reader antenna that prevails during a read operation.
Fig. 5 is a first exemplary timing diagram illustrating a reagent information read operation.
Fig. 6 is a diagram illustrating a configuration that prevails during liquid level detection.
Fig. 7 is a second exemplary diagram illustrating the configuration of a reagent container, an IC tag, and a reader antenna that prevails during a read operation.
Fig. 8 is a second exemplary timing diagram illustrating a reagent information read operation.
Fig. 9 is a third exemplary diagram illustrating the configuration of a reagent container, an IC tag, and a reader antenna that prevails during a read operation.
Fig. 10 is a third exemplary timing diagram illustrating a reagent information read operation.
Fig. 11 is a fourth exemplary diagram illustrating the configuration of a reagent container, an IC tag, and a reader antenna that prevails during a read operation.
Fig. 12 is a fourth exemplary timing diagram illustrating a reagent information read operation.
Fig. 13 is a fifth exemplary diagram illustrating the configuration of a reagent container, an IC tag, and a reader antenna that prevails during a read operation.

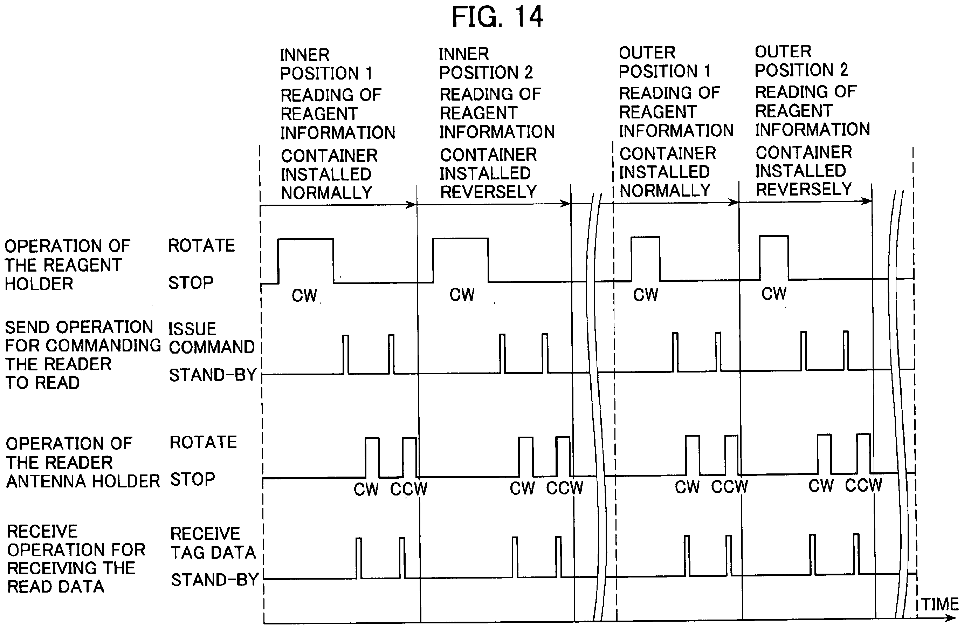

Fig. 14 is a fifth exemplary timing diagram illustrating a reagent information read operation.

### Mode for Carrying Out the Invention

Embodiments of the present invention will now be described with reference to the accompanying drawings.

### First Embodiment

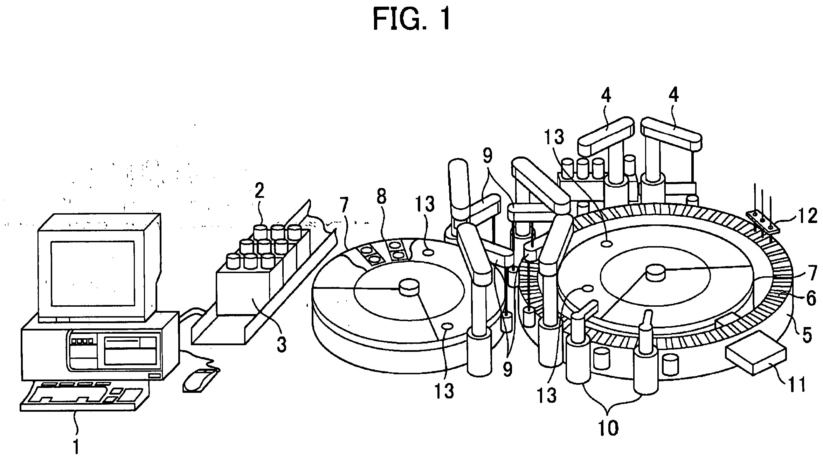

Fig. 1 is a diagram illustrating an overview of an automatic analyzer. In accordance with an instruction from an operating section 1, a reagent container to which an IC tag is attached moves to a position at which IC tag information is read. An RFID reader, which is mounted on the cover of a reagent cool box, then acquires the information about the reagent for each of the containers. A transport rack 3 in which a sample vessel 2 containing a sample is placed is transported to an analysis section. For the purpose of analysis of a sample transported to the analysis section, which is instructed by the operating section 1, a measurement liquid in the sample vessel 2 is suctioned by a sample dispensing mechanism 4 and introduced into a reaction vessel 6 on a reaction disk 5. Further, in accordance with the acquired information about the reagent container 8, the reagent container 8 placed in the reagent cool box 7 is moved to a position aligned with an opening in the cover in order to suction a predetermined reagent. The reagent in the reagent container 8 is then suctioned by a reagent dispensing mechanism 9 and introduced into the reaction vessel 6 on the reaction disk 5. The sample and reagent introduced into the reaction vessel 6 are stirred by a stirring mechanism 10. A color generated by a chemical reaction caused by stirring is then photometrically measured and analyzed by using a photometer 11 that includes a light source lamp, a spectroscopic diffraction grating, and a photodetector. After analysis, the reaction vessel 6 is cleaned by a cleaning mechanism 12 for the analysis of the next sample. After the sample to be analyzed is suctioned, the transport rack 3 in which the sample vessel 2 is placed is removed from the analysis section. Fig. 1 presents a partially torn away perspective view of the cover of the reagent cool box 7 so that some of plurality of cooled reagent containers 8 is exposed to view. The reagent cool box 7 is adopted for cooling the reagent containers 8 which are filled with a reagent and circumferentially disposed, and the box has at least one cover opening 13 for suctioning the reagent from the reagent containers 8.

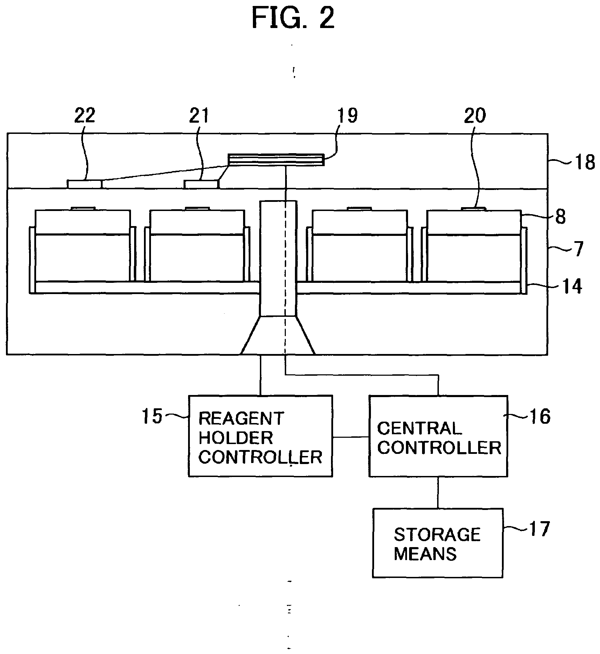

The configuration of a reagent container 8, an IC tag, and an RFID reader/writer for reading the information contained in the IC tag will now be described with reference to Fig. 2. As shown in Fig. 2, a reagent holder 14 and a reagent container 8 are placed in the reagent cool box 7. The reagent holder 14 can be rotationally driven by a reagent holder controller 15. The reagent holder controller 15 is operated by a central controller 16 of the automatic analyzer. The reagent holder controller 15 is connected to memory holding means 17 through the central controller 16.

The cover 18 of the reagent cool box is installed over the reagent cool box 7 to maintain the temperature in the reagent cool box constant. The RFID reader/writer 19 is disposed inside the cover 18 of the reagent cool box to communicate with the IC tag. The RFID reader/writer 19 is connected to the central controller 16. The RFID reader/writer 19 has a plurality of reader antennas. Specifically, the RFID reader/writer 19 has an inner IC tag reader antenna 21 and an outer IC tag reader antenna 22. These reader antennas are positioned above the IC tag 20 to read the IC tag 20 attached to the upper surface of the reagent container, which is placed on the inner and outer circumferences of the reagent holder 14. The above-described configuration is employed so that the IC tag 20 attached to the reagent container 8 is read on a one-to-one basis at the inner and outer circumferences.

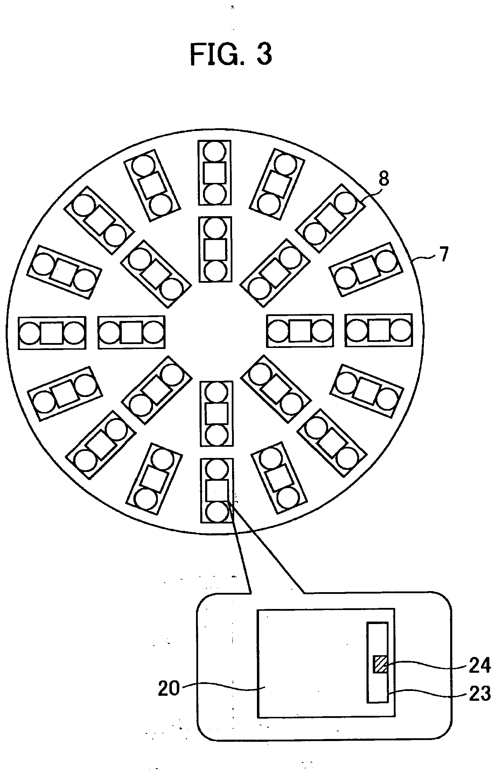

The position of the reagent container 8 in the reagent cool box 7 will now be described with reference to Fig. 3. In the reagent cool box 7, inner reagent containers are periodically aligned with outer reagent containers. The inner and outer reagent containers are oriented so that the widthwise sides of the inner and outer reagent containers face each other while their lengthwise sides align with each other. Further, the inner and outer reagent containers 8 are concentrically arranged while one widthwise side of the reagent containers faces the center of concentric circles.

The IC tag 20 is configured so that a tag antenna 23 is positioned close to one widthwise side of the four inner sides of the IC tag 20 to place the tag antenna 23 in a normally-oriented read region only as shown in Fig. 3. The IC tag includes an IC chip 24 that stores tag data in its nonvolatile memory. In the present embodiment, it is assumed that electromagnetic induction type passive RFID is used. Alternatively, however, electromagnetic coupling type or radio wave type passive RFID may be used. Another alternative is to use active RFID.

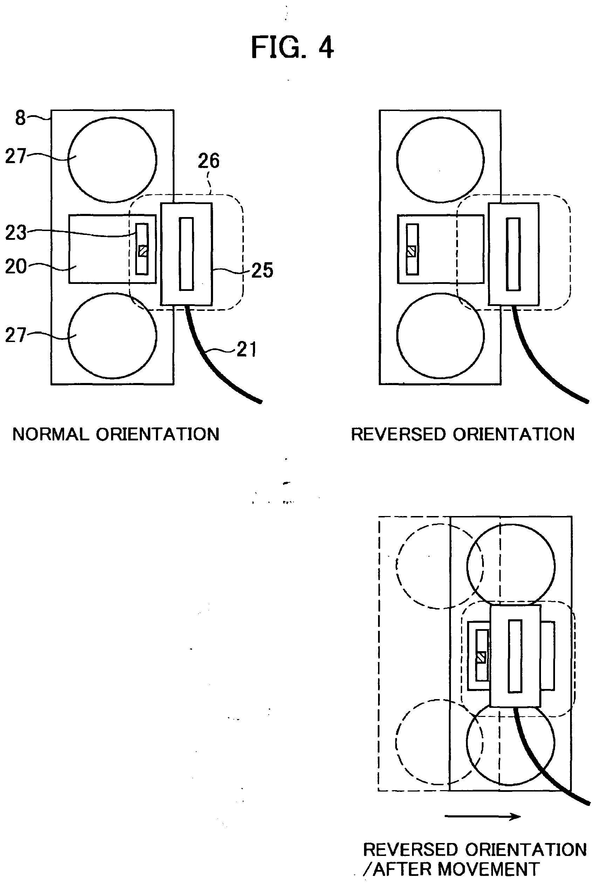

The positional relationship between the reagent container 8, IC tag 20, and inner IC tag reader antenna 21 that prevails at a reagent information read position will now be described with reference to Fig. 4. Fig. 4 indicates that the inner IC tag reader antenna 21 performs a read operation at the inner circumference, the outer IC tag reader antenna 22 also performs a read operation at the outer circumference in the same manner as the inner IC tag reader antenna 21.

The inner IC tag reader antenna 21 is positioned above the reagent container 8. A reader loop antenna pattern 25 is disposed in the reader antenna to communicate with the IC tag 20 by means of electromagnetic induction. The tag antenna 23 and the reader loop antenna pattern 25 are configured so that a region enclosed by a loop is narrowed into a rectangle to enhance the directionality of communication. A communication region 26 of the reader antenna is indicated in Fig. 4. Although the communication distance is not explicitly shown, the IC tag 20 obviously exists in a region compliant with the communication distance specifications for the reader antenna. Further, there are two reagent container openings 27 in the top of the reagent container 8. The IC tag 20 is disposed between the two openings.

When the tag antenna 23 is positioned in the communication region 26 of the reader antenna, the reader antenna can communicate with the IC tag 20 because radiation magnetic field strength necessary for operating the IC tag 20 is obtained. However, when the tag antenna 23 is positioned outside the communication region 26, an IC tag read/write operation cannot be performed because the radiation magnetic field strength necessary for operating the IC tag 20 is not obtained. The tag data can be acquired by modulating a carrier wave from the reader antenna with the information in the IC chip 24 and reflecting a resultant modulated signal.

When the reagent container is normally oriented, the tag antenna 23 is positioned in the communication region 26 of the reader antenna so that a read/write operation can be performed on the information in the IC tag 20. However, when the reagent container is reversely oriented, the tag antenna 23 moves away from the communication region 26 of the reader antenna as indicated in Fig. 4 so that a read/write operation cannot be performed on the tag data in the IC tag 20.

When the reagent container is reversely oriented, a read operation cannot be successfully performed at a reagent container information read position. However, the reagent container is moved after the unsuccessful first read operation so as to position the tag antenna 23 in the communication region 26 of the reader antenna. The reagent container is then stopped with the tag antenna 23 positioned in the communication region 26 so that a second read operation is performed. In a situation where the reagent container is reversely oriented, the tag data in the IC tag 20 can be acquired when the second read operation is performed. When the tag data in the IC tag 20 is acquired by the second read operation, it is concluded that the reagent container is reversely oriented.

At the reagent container information read position, a communication command is used to read/write the tag data in the IC tag 20. Particularly, a series of read operations is accomplished sequentially by stopping the reagent container at its information read position, allowing the central controller 16 to issue a read command to the RFID reader/writer 19, letting the RFID reader/writer 19 receive and recognize the information carried by the IC tag 20, and permitting the RFID reader/writer 19 to transmit the relevant tag data to the central controller 16 for tag data acquisition purposes.

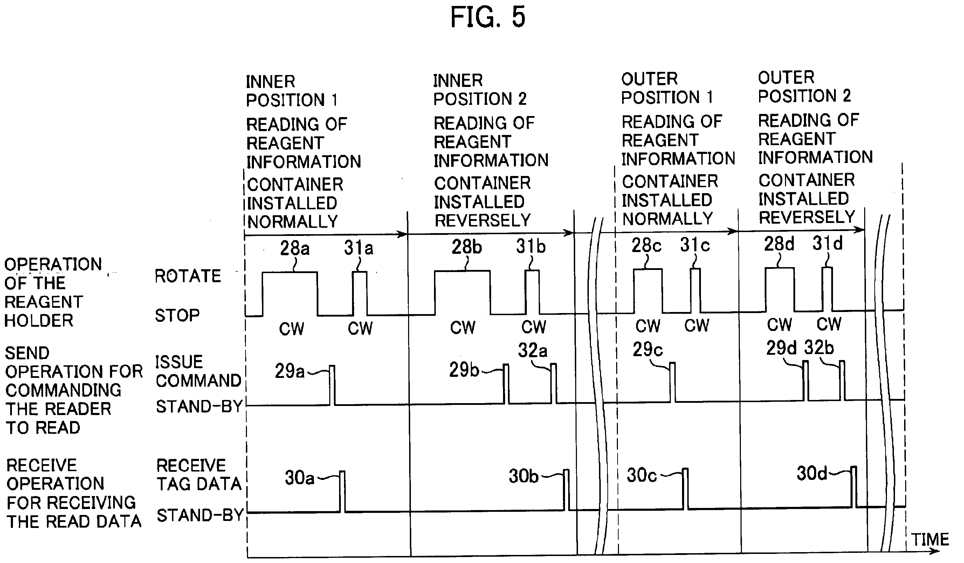

Operations of the RFID reader/writer 19 and reagent holder 14 will now be described with reference to Fig. 5. First of all, the central controller 16 rotates the reagent holder 14 through the reagent holder controller 15. An inner position 1 reagent information read rotation operation 28a is then performed so that the reagent container placed at inner position 1 is rotationally moved to the reagent container information read position. The operation is subsequently stopped to let the central controller 16 perform an inner position 1 reagent information read command issuance operation 29a relative to the RFID reader/writer 19. Upon command issuance, the tag data 30a in the IC tag 20 is acquired as far as the reagent container 8 is normally oriented. The reagent container is then moved in a CW direction. After this rotation operation 31a is performed to move the reagent container to a reagent container information reversely-oriented read position, the reagent container comes to a stop.

Next, the information about a reagent container placed at inner position 2 is read by performing the same operation as described above. In this manner, a reagent information read operation is performed for all the reagent containers placed at the inner circumference. When the reagent container placed at inner position 2 is reversely oriented, its tag data cannot be acquired after an inner position 2 reagent information read command issuance operation 29b is performed. When the tag data cannot be acquired by attempting to perform a first read operation as mentioned above, a second reagent information read command issuance operation 32a is performed after performing a rotation operation 31b to place the reagent container at the reagent container information reversely-oriented read position. This makes it possible to acquire the tag data 30b. When tag data acquisition cannot be accomplished by performing the second read operation, it is conceivable that no reagent container may exist in its position or that the relevant IC tag 20 may be damaged. A detailed description will be given later.

After information about all reagents placed at the inner circumference are read, information about reagents placed at the outer circumference are read in a manner indicated in the timing diagram. As there are a larger number of reagent containers at the outer circumference than at the inner circumference, the reagent holder's operating time at the outer circumference is shorter than that at the inner circumference. It is assumed that the reagent containers rotate in the CW direction, they may rotate in a CCW direction or by using a combination of CW and CCW directions.

When the tag data is acquired at the reversely-oriented read position in the manner described above, the operating section 1 issues an alarm to alert a user to a condition that requires attention.

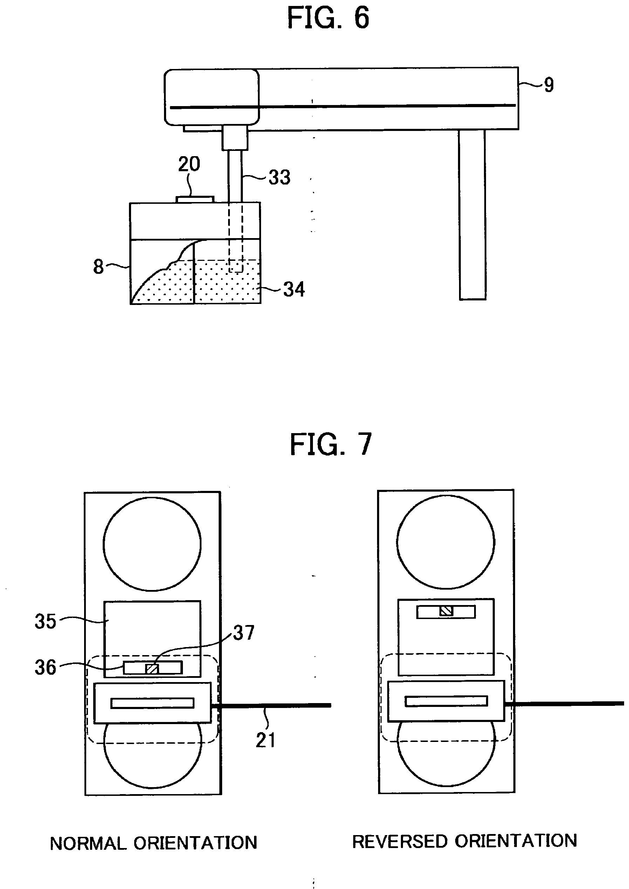

A method of determining the presence of a reagent container will now be described with reference to Fig. 6. After the reagent information read operation is completed at the inner and outer circumferences, the reagent dispensing mechanism 9 is driven and placed at each reagent container mounting position within the reagent holder 14 without regard to the presence of a reagent container so that a reagent probe 33 possessed by the reagent dispensing mechanism detects the liquid level of the reagent container. A technology employed for liquid level detection intermittently measures the capacitance between a ground and the leading end of the reagent probe. When a predetermined capacitance is exceeded by the measured capacitance, a monitoring circuit board generates a signal to indicate that the liquid level is detected. When the reagent probe 33 is introduced into a liquid reagent 34, the measured capacitance changes. Liquid level detection occurs when such a capacitance change is captured. Immediately after liquid level detection, the reagent probe stops it descent. After liquid level detection, the technology is used, for instance, to calculate the height of the liquid level from a probe ascent amount, which is based on the number of pulses issued to a pulse motor before an upper-limit point for the probe is reached, and measure a remaining reagent amount while considering a reagent container capacity. However, the technology is publicly known and already employed for conventional automatic analyzers. Therefore, the above operation is not described in detail here. Further, the reagent probe 33 has an abnormal descent detection function in which a detection plate and a detector, which are disposed in the reagent dispensing mechanism 9, detect a situation where the physical descent of the reagent probe 33 is obstructed when, for instance, probe leading end comes into contact with a solid. In other words, while the detector is used as a limiter, a signal of the detector is monitored so as to stop the descent of the reagent probe 33 when the detector becomes shielded by the detection plate and generates a signal. This liquid level detection operation is performed at all the reagent container mounting positions. The results of the liquid level detection operation are then combined with the results of earlier-described reagent container tag data reading to detect the presence of the reagent container.

When the above-described operation is completed, the normally-oriented tag data and reversely-oriented tag data simply indicate that the reagent container is present. Further, the inner and outer reagent container capacities can be interchanged depending on the orientation to accurately achieve the registration of the remaining reagent amount.

When the liquid level is detected by performing the liquid level detection operation in a situation where tag data acquisition cannot be accomplished by performing the two read operations, it is concluded that a reagent container and a reagent both exist. In other words, it is concluded that a damaged IC tag 20 or an illegal IC tag 20 (e.g., a tag using an IC chip incapable of establishing communication) is used or that no IC tag is attached to the reagent container. When, on the other hand, the liquid level is not detected, it is concluded that the reagent container is missing.

An alternative is to exercise the abnormal descent detection function in addition to a liquid level detection function. When the liquid level is not detected as described above, it is conceivable that the reagent container is missing or empty. Therefore, a reagent container stop position may be changed after the liquid level detection operation to bring the reagent probe 33 into contact with an upper surface of the reagent container other than a reagent container opening 27 instead of inserting the reagent probe 33 into a reagent container opening 27 and detect the presence of the reagent container by checking for an abnormal descent.

Another alternative is to detect the presence of the reagent container by exercising only the abnormal descent detection function from the beginning and without using the liquid level detection function.

### Second Embodiment

Embodiment which the reader antenna and IC tag layout is changed to use a lengthwise read IC tag 35 will now be described with reference to Fig. 7. The second embodiment uses the lengthwise read IC tag 35, which is different from the IC tag 20 used in the first embodiment. The lengthwise read IC tag 35 is configured so that a lengthwise tag antenna 36 is positioned close to one lengthwise side of the four inner sides of the lengthwise read IC tag 35 to place the lengthwise tag antenna 36 in the normally-oriented read region only. The lengthwise read IC tag 35 includes a lengthwise IC chip 37 that stores tag data.

The inner IC tag reader antenna 21 may be positioned so that its lengthwise direction is either parallel or perpendicular to the lengthwise direction of the lengthwise read IC tag 35. In the present embodiment, the inner IC tag reader antenna 21 is positioned so that its lengthwise direction is parallel to the lengthwise direction of the lengthwise read IC tag 35.

As is the case with the first embodiment, when the reagent container is normally oriented, the tag data can be acquired because the lengthwise tag antenna 36 is positioned in the communication region. In contrast, when the reagent container is reversely oriented, the tag data cannot be acquired because the lengthwise tag antenna 36 is positioned outside the communication region. Here, the direction of reagent container rotation differs from the direction in which the reagent container moves whether the lengthwise tag antenna 36 is normally oriented or reversely oriented. Therefore, the reagent container does not rotate into the reagent container reversely-oriented read position.

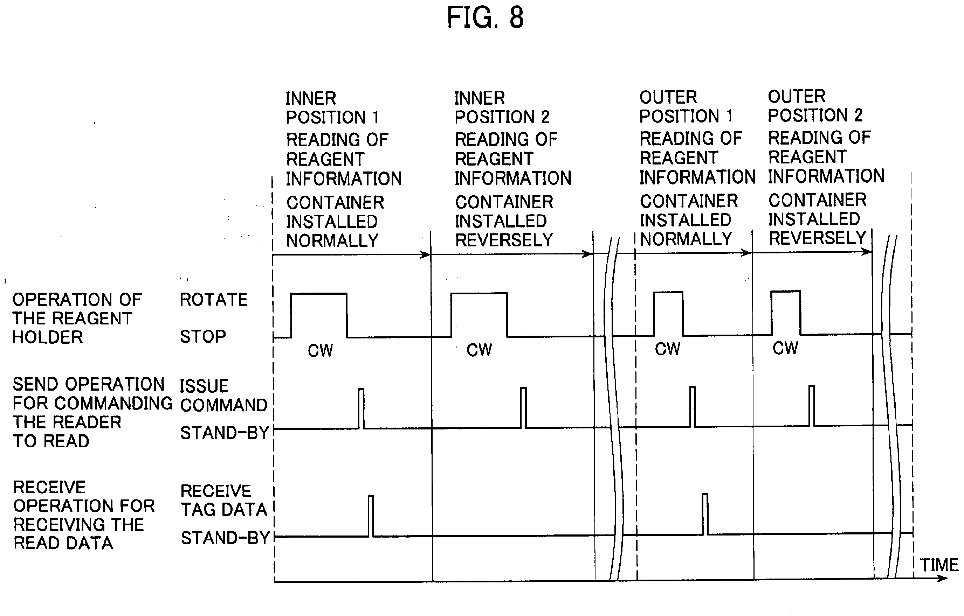

Operations of the RFID reader/writer 19 and reagent holder 14 will now be described with reference to Fig. 8. The timing diagram depicting the present embodiment is obtained by eliminating the rotation operation for moving the reagent container to the reagent container information reversely-oriented read position and the second reagent information read command issuance operation from the timing diagram of Fig. 5.

### Third Embodiment

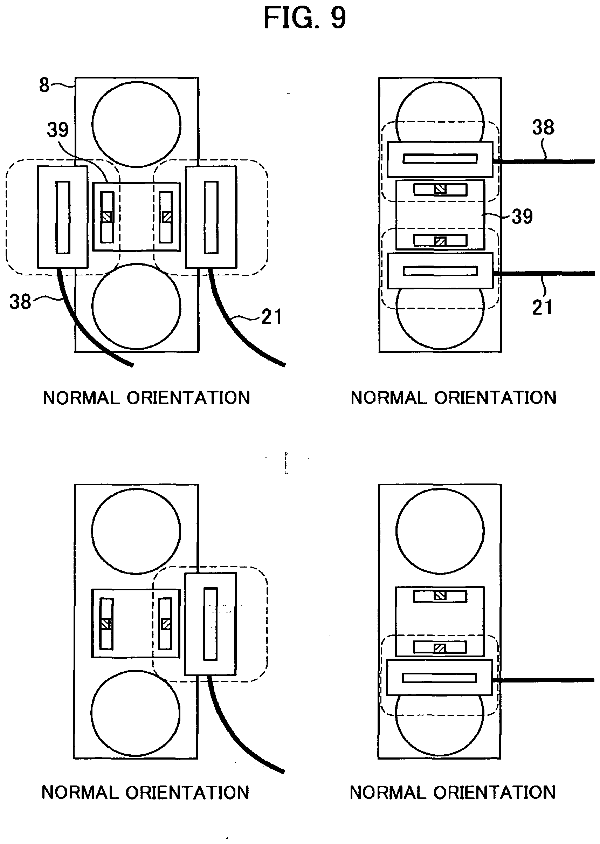

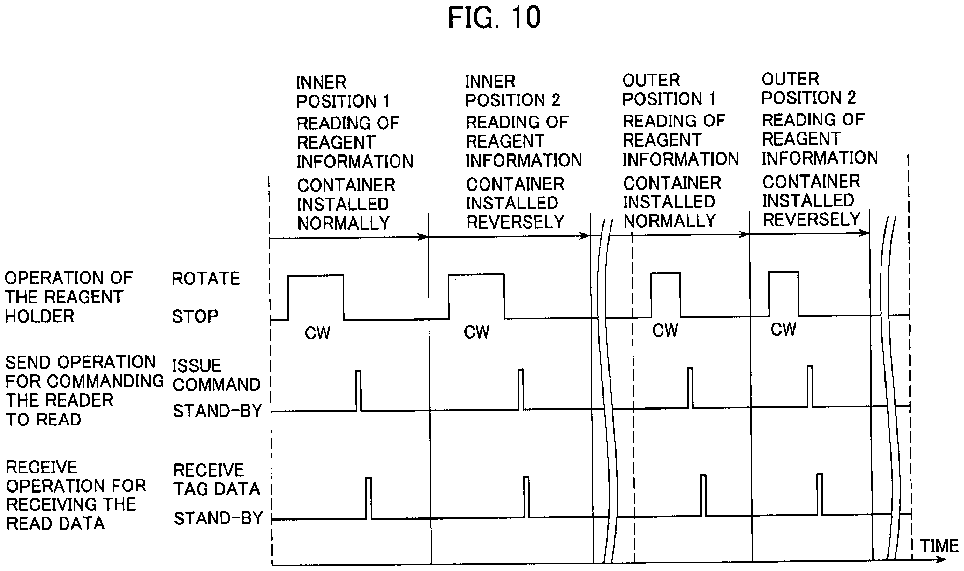

Embodiment which the reader antenna and IC tag layout is changed to use a double-chip IC tag 39 will now be described with reference to Fig. 9. The double-chip IC tag 39 includes two IC chips and two tag antennas. An IC chip containing authentic tag data and a tag antenna are disposed in the normally-oriented read region described with reference to Fig. 4. An IC chip containing dummy data and a tag antenna are disposed at a tag antenna position prevailing when the reagent container is reversely oriented as indicated in Fig. 4. If the dummy data is read, it is concluded that the reagent container is reversely oriented. Fig. 10 is a timing diagram illustrating a read operation performed with the above configuration employed. In contrast to the timing diagram of Fig. 8, which depicts the second embodiment, the present embodiment acquires either the authentic data or the dummy data as far as the reagent container exists after a reagent read command issuance operation.

In the present embodiment, an additional reader antenna 38 may be used so that the two reader antennas simultaneously perform a read operation. Alternatively, the double-chip IC tag 39 may be divided into two to prepare two different tags.

The additional reader antenna 38 should acquire information different from that is acquired by the inner IC tag reader antenna 21.

### Fourth Embodiment

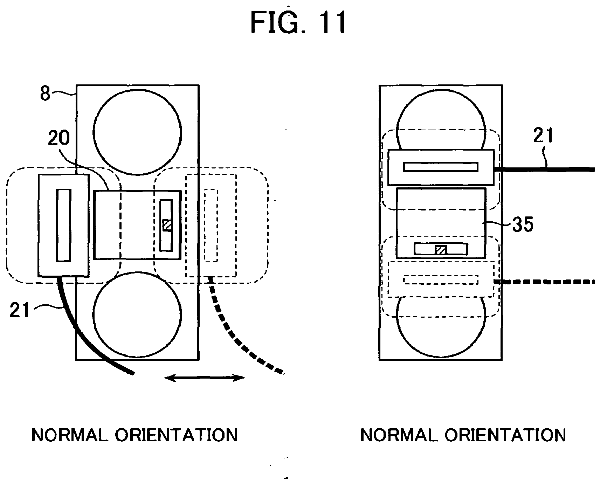

Embodiment which the reader antenna moves to perform a read operation will now be described with reference to Fig. 11. After a normally-oriented read operation is performed as indicated in Fig. 4, which depicts the first embodiment, or in Fig. 7, which depicts the second embodiment, the inner IC tag reader antenna 21 moves to a position at which the tag data can be read when the reagent container is reversely oriented. After the above move, the read operation is performed again. In this instance, the reagent holder does not rotate into the reagent container information reversely-oriented read position indicated in Fig. 4. In other words, the reagent container merely stops at the reagent container information read position. After the second read operation, the inner IC tag reader antenna 21 returns to a normally-oriented read position. Further, the same read operation may be performed by using the lengthwise read IC tag 35.

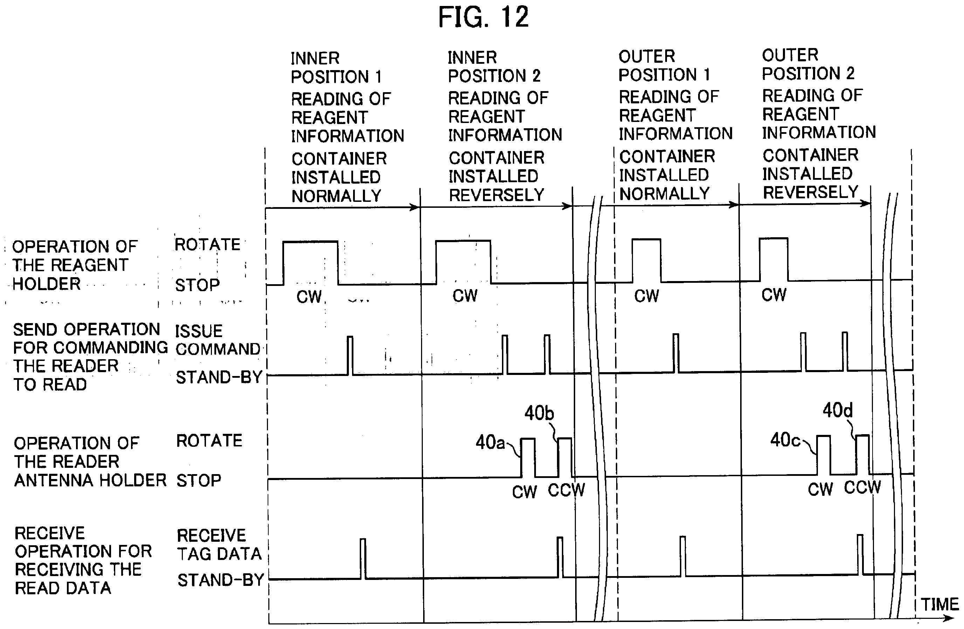

The read operation performed by moving the reader antenna will now be described with reference to a timing diagram of Fig. 12. When the tag data cannot be acquired because the reagent container is reversely oriented as indicated in Fig. 7, which depicts the second embodiment, a reader antenna holder operation 40a is performed to move the reader antenna. Subsequently, a reagent information read command is issued again to acquire the tag data. A reader antenna holder operation 40b is then performed to return the reader antenna to its previous position. A pulse motor or other actuator may be used for a reader antenna holder.

### Fifth Embodiment

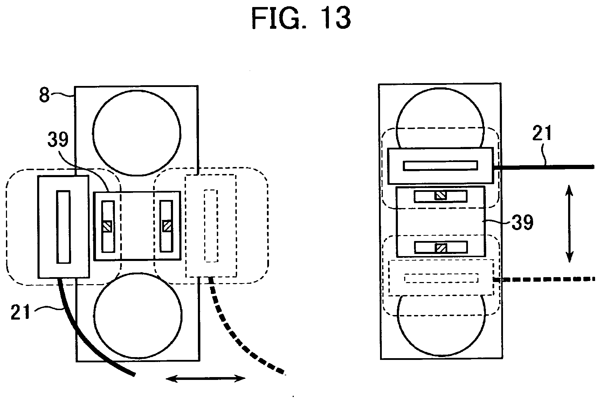

Embodiment which the reader antenna moves as described in connection with the fourth embodiment while the double-chip IC tag 39 according to the third embodiment is used will now be described with reference to Fig. 13. The reader antenna holder operations, which are indicated in Fig. 12 to depict the fourth embodiment, are performed at each position no matter whether the reagent container is normally oriented or reversely oriented. The reagent information read command is issued once before and after the CW direction movement of the reader antenna. When the dummy data is acquired in a situation where the reagent information read command is issued before the CW direction movement of the reader antenna, it is concluded that the reagent container is reversely oriented.

The embodiments described above make it possible to provide an automatic analyzer that includes means for preventing a reagent container from being reversely oriented. The embodiments also make it possible to provide an automatic analyzer that includes means for determining the presence of the reagent container without using an optical sensor.

### Description of Reference Numerals

1... Operating section
2... Sample vessel
3... Transport rack
4... Sample dispensing mechanism
5... Reaction disk
6... Reaction vessel
7... Reagent cool box
8... Reagent container
9... Reagent dispensing mechanism
10... Stirring mechanism
11... Photometer
12... Cleaning mechanism
13... Cover opening
14... Reagent holder
15... Reagent holder controller
16... Central controller
17... Memory holding means
18... Reagent cool box cover
19... RFID reader/writer
20... IC tag
21... Inner IC tag reader antenna
22... Outer IC tag reader antenna
23... Tag antenna
24... IC chip
25... Reader loop antenna pattern
26... Reader antenna's communication region
27... Reagent container opening
28, 28a, 28b, 28c, 28d... Inner/outer position reagent information read rotation operation
29, 29a, 29b, 29c, 29d... Inner/outer position reagent information read command issuance
30, 30a, 30b, 30c, 30d... Tag data
31, 31a, 31b, 31c, 31d... Rotation operation for moving to reagent container information reversely-oriented read position
32, 32a, 32b... Second reagent information read command issuance
33... Reagent probe
34... Liquid reagent
35... Lengthwise read IC tag
36... Lengthwise tag antenna
37... Lengthwise IC chip
38... Additional reader antenna
39... Double-chip IC tag
40, 40a, 40b, 40c, 40d... Reader antenna holder operation

## Claims

1. An automatic analyzer having a noncontact identification medium (20) with an antenna (23), a communication device (19) for communicating with the noncontact identification medium, a container (8) for containing a liquid, and a container holding mechanism (7) in which the container is to be placed, the antenna (23) being placed in an asymmetric position relative to the container, the automatic analyzer comprising:
a liquid level detection mechanism (33) for detecting the level of the liquid contained in the container
an identification mechanism (10) for identifying an orientation of the container (8) placed in the container holding mechanism (7),
**characterised in that**, when the noncontact identification medium (20) provided for the container at an information read position cannot communicate with the communication device (19) in a first read operation, the identification mechanism (16) is adapted to move the container a predetermined distance by driving the container holding mechanism (7) or to allow a communication antenna movement mechanism to change a position of a communication antenna (21) of the communication device (19), and then to cause the noncontact identification medium (20) to communicate with the communication device (19) again in a second read operation and identify the orientation of the container (8) placed in the container holding mechanism (7) from the first and second read operations, and
when the communication can neither be accomplished in the first nor in the second read operation, the automatic analyser is adapted to perform liquid level detection with respect to the container, and to determine that no or a damaged or illegal noncontact identification medium is attached to the container when a liquid level is detected in said liquid level detection.

2. The automatic analyzer according to claim 1, further comprising:
a container presence detection mechanism that is adapted to use the liquid level detection mechanism to detect whether the container is present.

3. The automatic analyzer according to claim 1 or 2, wherein the container includes at least two units of the noncontact identification medium, the units having different antenna communication ranges.

4. The automatic analyzer according to claim 1 or 2, wherein the communication device includes at least two communication antennas having different communication ranges.

## Patentansprüche

1. Automatischer Analysator, der ein kontaktloses Identifikationsmedium (20) mit einer Antenne (23), eine Kommunikationsvorrichtung (19) zur Kommunikation mit dem kontaktlosen Identifikationsmedium, einen Behälter (8) zur Aufnahme einer Flüssigkeit und einen Behälterhaltemechanismus (7), in den der Behälter gesetzt werden kann, aufweist, wobei die Antenne (23) in asymmetrischer Lager relativ zum Behälter angeordnet ist und der automatische Analysator Folgendes umfasst:
einen Flüssigkeitspegel-Erfassungsmechanismus (33) zum Erfassen des Pegels der in dem Behälter enthaltenen Flüssigkeit, und
einen Identifikationsmechanismus zum Identifizieren einer Orientierung des in den Behälterhaltemechanismus (7) eingesetzten Behälters (8),
**dadurch gekennzeichnet, dass** dann, wenn das für den Behälter an einer Informationsleseposition vorgesehene kontaktlose Identifikationsmedium (20) in einem ersten Lesevorgang nicht mit der Kommunikationsvorrichtung (19) kommunizieren kann, der Identifikationsmechanismus (16) eingerichtet ist, den Behälter durch Antrieb des Behälterhaltemechanismus (7) um eine vorbestimmte Strecke zu bewegen oder einen Kommunikationsantennen-Bewegungsmechanismus die Position einer Kommunikationsantenne (21) der Kommunikationsvorrichtung (19) bewegen zu lassen, und das kontaktlose Identifikationsmedium (20) dann in einem zweiten Lesevorgang erneut mit der Kommunikationsvorrichtung (19) kommunizieren zu lassen und die Orientierung des in den Behälterhaltemechanismus (7) gesetzten Behälters (8) aus dem ersten und dem zweiten Lesevorgang zu identifizieren, und
wenn die Kommunikation weder im ersten noch im zweiten Lesevorgang bewirkt werden kann, der automatische Analysator eingerichtet ist, für den Behälter eine Flüssigkeitspegelerfassung durchzuführen und zu bestimmen, dass kein oder ein beschädigtes oder ungültiges kontaktloses Identifikationsmedium am Behälter angebracht ist, wenn in der Flüssigkeitspegelerfassung ein Flüssigkeitspegel erfasst wird.

2. Automatischer Analysator nach Anspruch 1, außerdem umfassend:
einen Behälteranwesenheits-Erfassungsmechanismus, der zur Verwendung des Flüssigkeitspegel-Erfassungsmechanismus eingerichtet ist, um zu erfassen, ob der Behälter anwesend ist.

3. Automatischer Analysator nach Anspruch 1 oder 2, wobei der Behälter mindestens zwei Einheiten des kontaktlosen Identifikationsmediums enthält, die unterschiedliche Antennenkommunikationsreichweiten aufweisen.

4. Automatischer Analysator nach Anspruch 1 oder 2, wobei die Kommunikationsvorrichtung mindestens zwei Kommunikationsantennen mit unterschiedlichen Kommunikationsreichweiten aufweisen.

## Revendications

1. Analyseur automatique ayant un support d'identification sans contact (20) avec une antenne (23), un dispositif de communication (19) pour communiquer avec le support d'identification sans contact, un contenant (8) pour contenir un liquide et un mécanisme de maintien de contenant (7) dans lequel le contenant doit être placé, l'antenne (23) étant placée dans une position asymétrique par rapport au contenant, l'analyseur automatique comprenant :
un mécanisme de détection de niveau de liquide (33) pour détecter le niveau du liquide contenu dans le contenant,
un mécanisme d'identification pour identifier une orientation du contenant (8) placé dans le mécanisme de maintien de contenant (7),
**caractérisé en ce que**, lorsque le support d'identification sans contact (20) prévu pour le contenant à une position de lecture d'informations ne peut pas communiquer avec le dispositif de communication (19) lors d'une première opération de lecture, le mécanisme d'identification (16) est conçu pour déplacer le contenant d'une distance prédéterminée par entrainement du mécanisme de maintien de contenant (7) ou pour permettre à un mécanisme de mouvement d'antenne de communication de changer la position d'une antenne de communication (21) du dispositif de communication (19), puis pour amener le support d'identification sans contact (20) à communiquer avec le dispositif de communication (19) à nouveau dans une seconde opération de lecture et identifier l'orientation du contenant (8) placé dans le mécanisme de maintien de contenant (7) à partir des première et seconde opérations de lecture, et
lorsque la communication ne peut être effectuée ni dans la première ni dans la seconde opération de lecture, l'analyseur automatique est conçu pour effectuer une détection de niveau de liquide par rapport au contenant, et pour déterminer qu'aucun support d'identification sans contact n'est attaché ou qu'un support d'identification sans contact endommagé ou illicite est attaché au contenant lorsqu'un niveau de liquide est détecté dans ladite détection de niveau de liquide.

2. Analyseur automatique selon la revendication 1, comprenant en outre :
un mécanisme de détection de présence de contenant qui est conçu pour utiliser le mécanisme de détection de niveau de liquide pour détecter si le contenant est présent.

3. Analyseur automatique selon la revendication 1 ou 2, dans lequel le contenant comprend au moins deux unités du support d'identification sans contact, les unités ayant des portées de communication par antenne différentes.

4. Analyseur automatique selon la revendication 1 ou 2, dans lequel le dispositif de communication comprend au moins deux antennes de communication ayant des portées de communication différentes.
